# EUROPEAN PATENT SPECIFICATION

(11) **EP 1 843 538 B1**
(45) Date of publication and mention of the grant of the patent: **02.04.2014**
(21) Application number: 06007055.4
(22) Date of filing: 03.04.2006
(51) Int. Cl.: H04L 29/06, H04L 29/08

(54) **Method for conference setup between mobile terminals for a shared whiteboard session**
Methode zum Aufbau einer Konferenz zwischen mobilen Endgeräten für eine gemeinsame Whiteboard Sitzung
Méthode pour établissement d' une conférence entre des terminaux mobiles pour une session partagée du tableau blanc

(43) Date of publication of application: 10.10.2007
(73) Proprietor: Samsung Electronics Co., Ltd., Suwon-si, Gyeonggi-do, 443-742 (KR)
(72) Inventor: Kang, Tae-Young c/o Samsung Electronics Co., Ltd., Suwon-si Gyeonggi-do (KR); Choi, Woo-Hyuk c/o Samsung Electronics Co., Ltd., Suwon-si Gyeonggi-do (KR); Hong, Nho-Kyung c/o Samsung Electronics Co., Ltd., Suwon-si Gyeonggi-do (KR); Lee, Chang-Hoon c/o Samsung Electronics Co., Ltd., Suwon-si Gyeonggi-do (KR); Hwang, Byeong-Cheol Samsung Electronics Co., Ltd., Suwon-si Gyeonggi-do (KR); Park, Jae-Hyun c/o Samsung Electronics Co., Ltd., Suwon-si Gyeonggi-do (KR); Kim, Bong-Hee c/o Samsung Electronics Co., Ltd., Suwon-si Gyeonggi-do (KR)
(74) Representative: Grünecker, Kinkeldey, Stockmair & Schwanhäusser

(56) References cited:
- EP-A- 1 331 786
- EP-A- 1 571 791
- US-A1- 2005 220 041
- JIAN ZHAI ET AL: "A Cooperative Image Editing Tool over Mobile Phones" MULTIMEDIA MODELLING CONFERENCE, 2004. MMM 2005. PROCEEDINGS OF THE 11TH INTERNATIONAL HONOLULU, HI, USA 12-14 JAN. 2005, PISCATAWAY, NJ, USA,IEEE, 12 January 2005 (2005-01-12), pages 264-270, XP010765576 ISBN: 0-7695-2164-9
- LOESING K ET AL: "An implementation of reliable group communication based on the peer-to-peer network JXTA" COMPUTER SYSTEMS AND APPLICATIONS, 2005. THE 3RD ACS/IEEE INTERNATIONAL CONFERENCE ON CAIRO, EGYPT JAN. 3-6, 2005, PISCATAWAY, NJ, USA,IEEE, 3 January 2005 (2005-01-03), pages 440-447, XP010777694 ISBN: 0-7803-8735-X
- GERALD FRIEDLAND, LARS KNIPPING, RAÚL ROJAS: "E-Chalk Technical Description"[Online] 28 August 2001 (2001-08-28), XP002383113 Freie Universität Berlin, Institut für Informatik, Takustr. 9, 14195 Berlin, Germany Retrieved from the Internet: URL:http://kazan.inf.fu-berlin.de/echalk/d ocs/report010501.pdf> [retrieved on 2006-05-30]
- GADI SHAMIR: "Shared Whiteboard: A Java Application ih the Transis Environment"[Online] 30 October 1996 (1996-10-30), XP002383114 High Availability Lab, Computer Science Department, The Hebrew University of Jerusalem, Jerusalem, Israel Retrieved from the Internet: URL:http://citeseer.ist.psu.edu/cache/pape rs/cs/5847/ftp:zSzzSzftp.cs.huji.ac.ilzSzu serszSztransiszSzlab-projectszSzlayerszSzW hiteBoard.pdf/shamir96shared.pdf> [retrieved on 2006-05-30]
- ANONYMOUS: "WINDOWS NETMEETING - FEATURES" UNKNOWN, 17 June 1999 (1999-06-17), XP002245623

## Description

### BACKGROUND OF THE INVENTION

### 1. Field of the Invention

The present invention relates to a data transmission method of a mobile communication terminal, and more particularly to a method for transmitting image data in real-time between mobile communication terminals.

### 2. Description of the Related Art

It is common that mobile communication terminal users exchange information, such as the location of an appointment, a phone number, an e-mail address and a bank account number, by voice during communication. However, the information may be inaccurately transferred by voice. In addition, in environments having bad communication sensitivity, the accuracy of information transfer may increasingly deteriorate.

EP 1 331 786 A, discloses a method and device for providing a communication session with the exchange of data messages using GPRS. Corresponding IP address for the initiator terminal or any other terminal are already given or assigned to a corresponding terminal.

EP 1 571 791 A, discloses a mobile communication system with a service provider and messenger server, wherein there is a packet data core network and a packet data service node. Messages are exchanged between the host mobile communication terminal and at least one client mobile communication terminal.

US 2005/2200 41 A1, discloses a peer-to-peer mobile data transfer method for establishing a direct data transfer session between mobile devices over digital mobile network system that supports data packets-based communications.

Jian Zhai et al: "A cooperative image editing tool over mobile phones". Multimedia Modelling Conference, 2004, discloses uploading of original image data to a server for editing, wherein the user may finish the editing work and can submit it back to the server.

Loesing K et al: "An implementation of reliable group communication based on the peer-to-peer network JXTA" Computer Systems and Applications, 2005, discloses drawing on a shared whiteboard, wherein changes to an author's local whiteboard are communicated consistently to all other artist's whiteboards. The corresponding application can be realized by TCP/IP.

Gerald Friedland, Lars Knipping et al: "E-Chalk technical description" [online] 28, August 2001, XP002383113, Freie Universität Berlin, also discloses some kind of whiteboard called Chalk board or E-Chalk system, wherein it is referred to other projects like transport, extended whiteboard, etc. A corresponding tool box is possible as some kind of GUI, wherein all GUI events that have taken place on the board are passed to the network server which then sends them out into the internet and also records them to a file.

Gadi Shamir: "Shared Whiteboard: A java application in the transis environment" [online] 30 October 1996, XP002383114, The Hebrew University of Jerusalem, discloses a distributed whiteboard, wherein such a whiteboard is considered as a virtual sketch book for artists working at different, possibly distanced geographic locations. They all have access to the corresponding whiteboard and may sketches.

Anonymous: "Windows netmeeting - features", Unknown, 17 June 1999, XP002245623, generally refers to a whiteboard which allows for collaboration in real-time with others via graphic information.

### SUMMARY OF THE INVENTION

It is an object of the present invention to provide a method for displaying image data from a host mobile communication terminal on a client mobile communication terminal in real-time with only a minimum of data to be transmitted wherein simultaneously the corresponding image is redrawn in real-time and as similar as possible as the drawing of the user at the same time.

This object is solved by the features of claim 1.

Advantageous embodiments are disclosed by the features of the sub-claims.

### BRIEF DESCRIPTION OF THE DRAWINGS

The above and other objects, features and advantages of the present invention will be more apparent from the following detailed description taken in conjunction with the accompanying drawings, in which:
FIG. 1 is a schematic diagram illustrating the construction of a mobile communication system for transmitting/receiving data in real-time between mobile communication terminals according to a preferred embodiment of the present invention;
FIG. 2 is a diagram illustrating the structure of an invite message transmitted from the host mobile communication terminal to the client mobile communication terminals in FIG. 1;
FIG. 3 is a diagram illustrating the structure of a register message transmitted from the client mobile communication terminals to the host mobile communication terminal in FIG. 1;
FIG. 4 is a diagram illustrating a direct board according to a preferred embodiment of the present invention;
FIG. 5 illustrates a mobile communication terminal for transmitting/receiving in real-time data drawn on the direct board in FIG. 4 according to a preferred embodiment of the present invention;
FIG. 6 is a diagram illustrating an image which a user has drawn on the direct board in FIG. 5 with a stylus pen;
FIGs. 7 and 8 are diagrams illustrating a process of transmitting in real-time the image drawn on the direct board in FIG. 5;
FIGs. 9 to 12 are diagrams illustrating a process of using a direct board together with voice communication according to a preferred embodiment of the present invention;
FIGs. 13 to 15 are diagrams illustrating a process of using a direct board together with a messenger according to a preferred embodiment of the present invention;
FIGs. 16 to 18 are diagrams illustrating a process of using a direct board according to a preferred embodiment of the present invention;
FIG. 19 is a flow diagram of a process of transmitting in real-time images drawn on direct boards of a host mobile communication terminal and a client mobile communication terminal according to a preferred embodiment of the present invention; and
FIGs. 20 to 23 are diagrams illustrating image data transmitted in real-time according to a preferred embodiment of the present invention.

### DETAILED DESCRIPTION OF THE PREFERRED EMBODIMENT

A preferred embodiment of the present invention will be described in detail herein below with reference to the accompanying drawings. In the following description, a detailed description of known functions and configurations incorporated herein will be omitted when it may obscure the subject matter of the present invention.

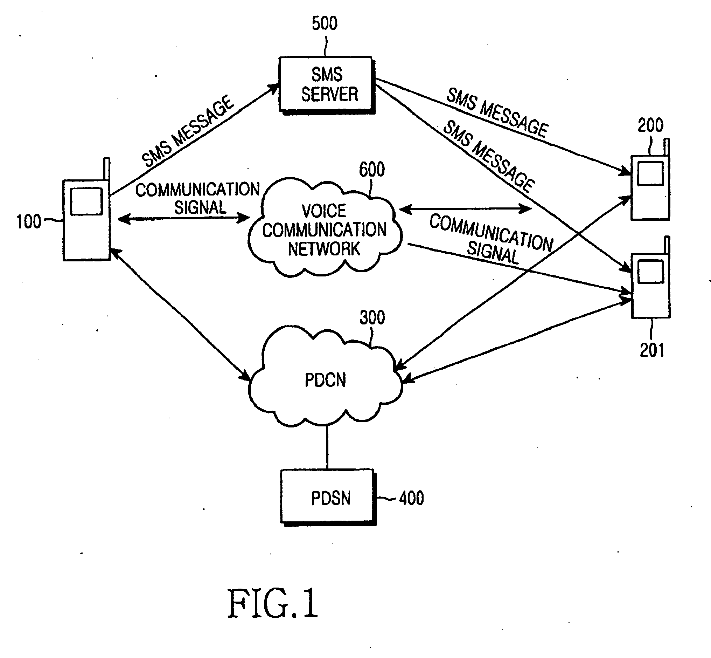

FIG. 1 is a schematic diagram illustrating the construction of a mobile communication system for transmitting/receiving data in real-time between mobile communication terminals according to a preferred embodiment of the present invention.

Referring to FIG. 1, a host mobile communication terminal 100 and client mobile communication terminals 200 and 201 establish a Point-To-Point (P2P) communication channel with a Packet Data Serving Node (PDSN) 400 through a Packet Data Core Network (PDCN) 300, respectively, thereby performing mutual packet data communication.

The host mobile communication terminal 100 and the client mobile communication terminals 200 and 201 include a messenger program for using a messenger service, respectively.

If messenger-operating signals are input, the host mobile communication terminal 100 executes the stored messenger program regardless of whether voice communication is performed. If signals requesting communication through the messenger service are input from the users of the client mobile communication terminals 200 and 201, the host mobile communication terminal 100 generates a list of communication partners, i.e. a buddy list, registered through the respective messenger program of the selected mobile communication terminals 200 and 201.

The host mobile communication terminal 100 performs a P2P protocol connection with the PDSN 400 through the PDCN 300 in order to acquire an Internet Protocol (IP) address. If the P2P protocol connection with the PDSN 400 is successfully established, the host mobile communication terminal 100 receives the IP address from the PDSN 400. After receiving the IP address from the PDSN 400, the host mobile communication terminal 100 transmits an invite message including the IP address in the form of an SMS to the client mobile communication terminals 200 and 201 through an SMS server 500.

The host mobile communication terminal 100 determines if register messages are received from the client mobile communication terminals 200 and 201 through the PDCN 300 as a response message for the invite message for a preset time period. If the register messages are received, the host mobile communication terminal 100 updates the buddy list on the basis of the register messages, and transmits the updated buddy list to the client mobile communication terminals 200 and 201.

If the invite message is received from the host mobile communication terminal 100 through the SMS server 500, each of the client mobile communication terminals 200 and 201 executes the stored messenger program. Each of the client mobile communication terminals 200 and 201 detects basic information of the host mobile communication terminal 100, which includes the IP address of the host mobile communication terminal 100, from the invite message. Each of the client mobile communication terminals 200 and 201 performs the P2P protocol connection with the PDSN 400 through the PDCN 300. If the P2P protocol connection with the PDSN 400 is successfully established, each of the client mobile communication terminals 200 and 201 receives IP addresses from the PDSN 400.

Each of the client mobile communication terminals 200 and 201 generates register messages including their IP addresses. Then, each of the client mobile communication terminals 200 and 201 transmits the register messages to the host mobile communication terminal 100 via the PDCN 300. If each of the client mobile communication terminals 200 and 201 receives the buddy list from the host mobile communication terminal 100 after transmitting the register messages, each of the client mobile communication terminals 200 and 201 updates previously stored buddy lists on the basis of the received buddy list. The buddy list includes address information registered for use of the messenger service through the host mobile communication terminal 100 and the client mobile communication terminals 200 and 201. Accordingly, the host mobile communication terminal 100 and the client mobile communication terminals 200 and 201 include the updated buddy lists, respectively, and they can use a messenger service with other mobile communication terminals registered to addresses corresponding to the buddy lists.

Among the host mobile communication terminal 100 and the client mobile communication terminals 200 and 201, a mobile communication terminal having received messenger service termination signals transmits a messenger service termination message to the other mobile communication terminals having used the messenger service through the PDCN 300. Among the host mobile communication terminal 100 and the client mobile communication terminals 200 and 201, mobile communication terminals having received the messenger service termination message update their own buddy lists and delete information of the mobile communication terminal which transmitted the messenger service termination message. In this way, the host mobile communication terminal 100 and the client mobile communication terminals 200 and 201 can check the status of mobile communication terminals which are using the messenger service in real-time.

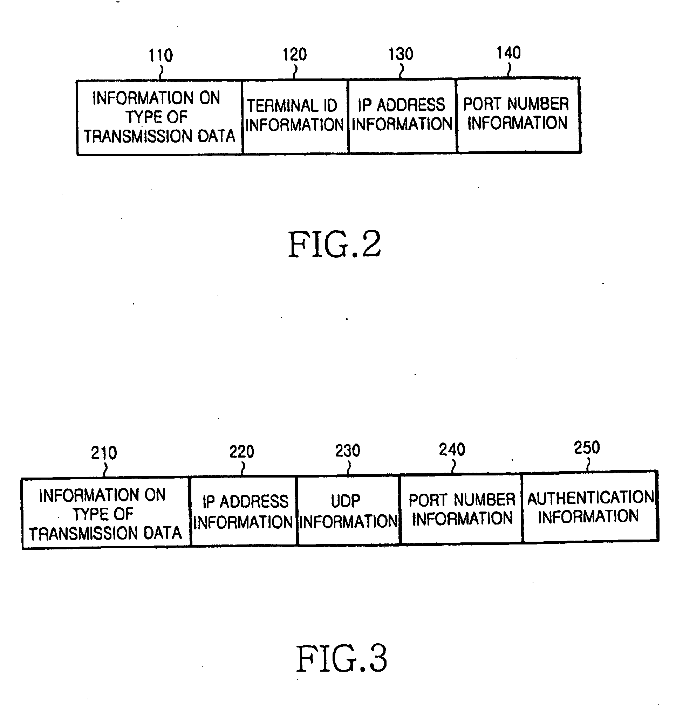

FIG. 2 is a diagram illustrating the structure of an invite message transmitted from the host mobile communication terminal to the client mobile communication terminals in FIG. 1.

Referring to FIG. 2, the invite message includes information 110 on the type of transmission data, ID information 120 of the host mobile communication terminal 100, information 130 about an IP address assigned to the host mobile communication terminal 100, and port number information 140.

The information 110 represents information on the type of transmitted data, which is an SMS message denoting the invite message. The ID information 120 represents authentication information of the host mobile communication terminal 100, which for example, may include phone number information. The information 130 represents information about an IP address assigned to the host mobile communication terminal 100. The port number information 140 represents information about a port number assigned to the host mobile communication terminal 100.

FIG. 3 is a diagram illustrating the structure of a register message transmitted from the client mobile communication terminals to the host mobile communication terminal in FIG. 1.

Referring to FIG. 3, the register message includes information 210 on the type of transmission data, IP address information 220, User Datagram Protocol (UDP) information 230, port number information 240 and authentication information 250.

The information 210 represents information on the type of transmitted data, which is a message denoting the register message. The IP address information 220 includes IP address information of the host mobile communication terminal 100 and the client mobile communication terminals 200 and 201. The UDP information 230 includes UDP information of the host mobile communication terminal 100 and the client mobile communication terminals 200 and 201. The port number information 240 represents information for port numbers assigned to the client mobile communication terminals 200 and 201. The authentication information 250 includes subscriber information (e.g. phone number information) necessary for authentication of the client mobile communication terminals 200 and 201.

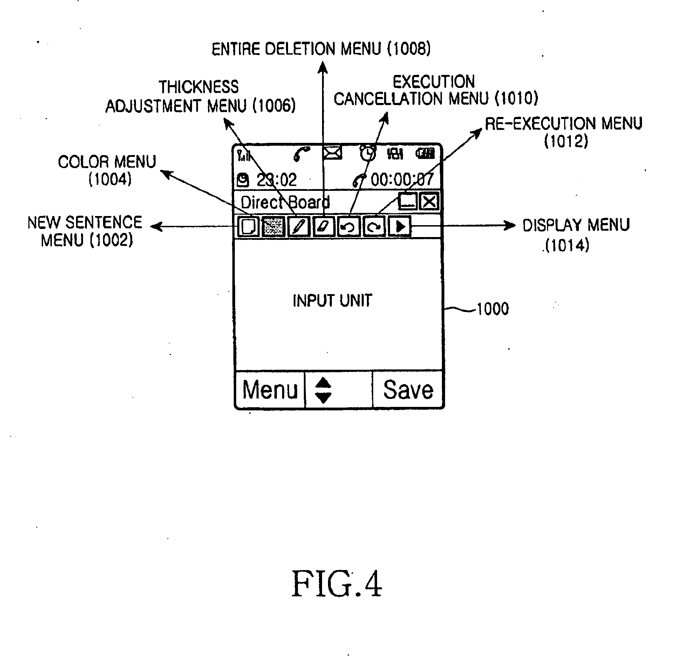

In the meantime, since the messenger service as described above is provided through a separate data network other than a voice communication network 600 (FIG. 1), the host mobile communication terminal 100 and the client mobile communication terminals 200 and 201 may use the messenger service and simultaneously exchange communication signals with one another through the voice communication network 600, to allow users of the host mobile communication terminal 100 and the client mobile communication terminals 200 and 201 to use the messenger service while performing voice communication with one another. In order to simultaneously and efficiently use the voice communication and the messenger service as described above, the present invention provides the messenger service using a direct board. The direct board represents an application used when users of the host mobile communication terminal 100 and the client mobile communication terminals 200 and 201 draw desired images with a stylus pen or a touch screen while performing communication. Hereinafter, a screen on which the direct board is executed will be described in detail with reference to FIG. 4.

The direct board includes an input unit 1000 for drawing images, a new sentence menu 1002 for initializing the input unit 1000 in order to draw new images, a color menu 1004 for selecting the color of an input image line, a thickness adjustment menu 1006 for adjusting the thickness of the input image line, an entire deletion menu 1008 for deleting all drawn images, an execution cancellation menu 1010 for canceling drawn images, a re-execution menu 1012 for restoring the image cancelled by the execution cancellation menu 1010, and a display menu 1014 for reproducing an image drawing process. The users of the host mobile communication terminal 100 and the client mobile communication terminals 200 and 201 can write the location of an appointment, a phone number, an e-mail address, a bank account number, etc., using the direct board during communication, and can exchange it with one another.

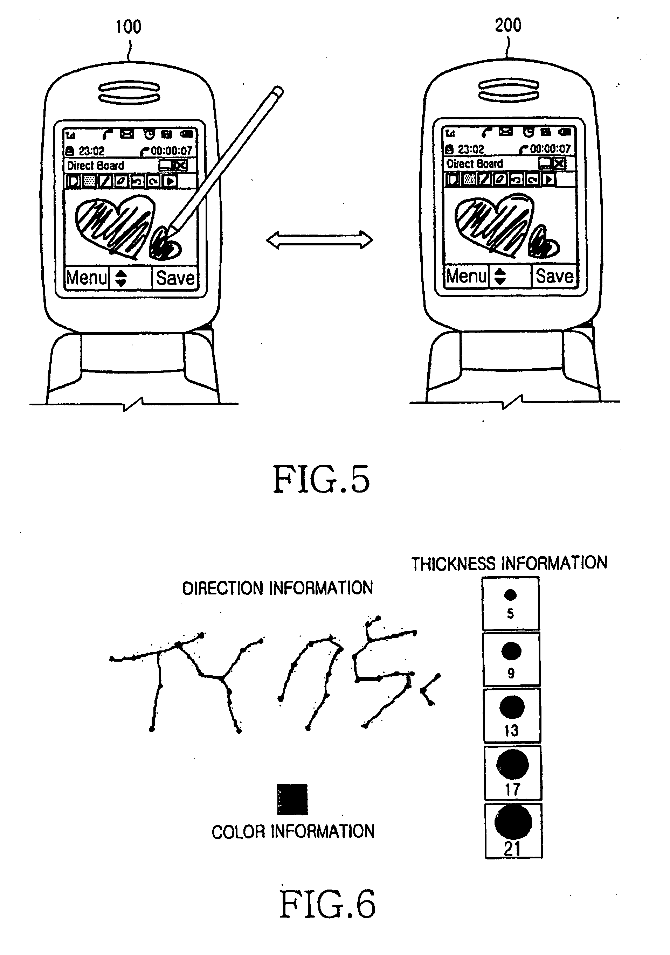

Whenever a user draws an image by means of the direct board, the mobile communication terminal of the user transmits the drawn image in real-time. For example, if the user of the host mobile communication terminal 100 draws a heart shape with a stylus pen as illustrated in FIG. 5, the host mobile communication terminal 100 transmits the entire process, in which the heart shape is drawn, to the client mobile communication terminals 200 and 201 in real-time. Accordingly, the input unit 1000 of the direct board included in the client mobile communication terminal 200 displays the entire drawing process as the user of the host mobile communication terminal 100 directly draws the heart shape. Hereinafter, a process in which the image drawn on the direct board of the host mobile communication terminal 100 is displayed in real-time on the direct board of the client mobile communication terminal 200 will be described in detail with reference to FIGs. 6 to 8.

FIG. 6 is a diagram illustrating an image which a user has drawn on the direct board in FIG. 5 with a stylus pen.

Information for the image which the user has drawn on the direct board with the stylus pen includes direction information of the image line, color information and thickness information. The direction information of the image line may include horizontal and vertical coordinates, and the color information may include combinations of RGB values. The thickness information may include values set through the thickness adjustment menu 1006, or numerical values corresponding to the degree in which the stylus pen used by the user presses a touch pad. That is, the thickness of the image line drawn on the input unit changes in proportion to the force with which the user presses against the touch pad with the stylus pen. Accordingly, variation of the thickness may be the thickness information.

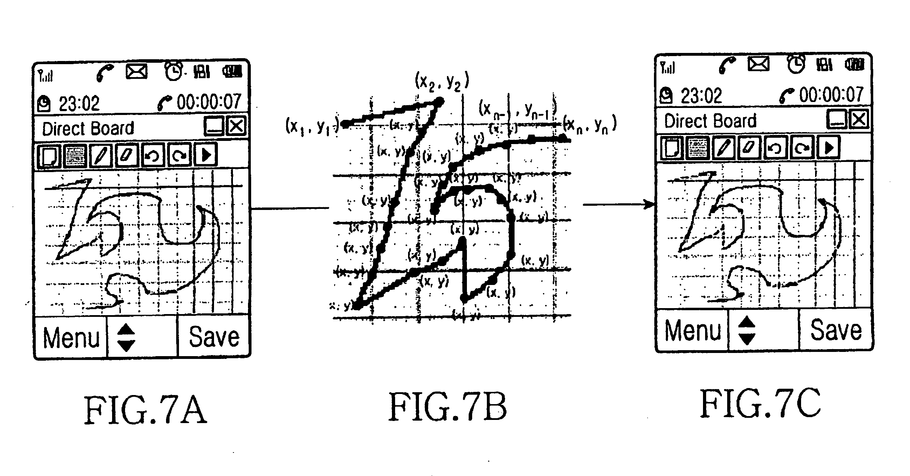

When the user draws the image on the input unit 1000 of the direct board in the host mobile communication terminal 100 with the stylus pen as illustrated in FIG. 7A, the horizontal and vertical coordinates included in the direction information of the image line correspond to horizontal and vertical coordinates of the image line scanned by the host mobile communication terminal 100 in a predetermined time interval. Further, the host mobile communication terminal 100 determines all horizontal and vertical coordinates, which are scanned between horizontal and vertical coordinates scanned when the stylus pen contacts the touch pad for the first time and horizontal and vertical coordinates scanned when the stylus pen separates from the touch pad, as information for forming one image line.

FIG. 7B illustrates coordinates which the host mobile communication terminal 100 scans and computes the image drawn on the direct board in a predetermined time interval. The host mobile communication terminal 100 transmits horizontal and vertical coordinates (i.e. x₁ and y₁) scanned when the stylus pen contacts the touch pad for the first time to the client mobile communication terminals 200 and 201 in real-time. Herein, the host mobile communication terminal 100 also transmits color and thickness information at the coordinates x₁ and y₁, and information reporting the beginning of one image line to the client mobile communication terminals 200 and 201. Then, each of the client mobile communication terminals 200 and 201 displays in real-time the beginning point of the image line at the coordinates x₁ and y₁ of its own input unit according to the color and thickness information received from the host mobile communication terminal 100. Each of the client mobile communication terminals 200 and 201 determines the coordinates x₁ and y₁ as the beginning point of the image line according to the information reporting the beginning of one image line, which has been received from the host mobile communication terminal 100.

After detecting the coordinates x₁ and y₁, the host mobile communication terminal 100 transmits coordinates x₂ and y₂, which have been scanned after a predetermined time passes, to the client mobile communication terminals 200 and 201 in real-time. Herein, the host mobile communication terminal 100 also transmits color and thickness information at the coordinates x₂ and y₂ to the client mobile communication terminals 200 and 201. Accordingly, each of the client mobile communication terminals 200 and 201 draws a line from the coordinates x₁ and y₁ to the coordinates x₂ and y₂ on its own input unit, adjusts the color and thickness of the drawn image line according to the color and thickness information received from the host mobile communication terminal 100, and displays the image line in real-time.

While the user draws the image with the stylus pen, the host mobile communication terminal 100 scans horizontal and vertical coordinates in real-time in the same manner, and transmits the scanned horizontal and vertical coordinates to the client mobile communication terminals 200 and 201 together with color and thickness information at the scanned coordinates. Then, each of the client mobile communication terminals 200 and 201 draws new image lines based on the newly received coordinates on its own input unit, adjusts the color and thickness of the drawn image lines according to the newly received color and thickness information, and displays the image lines in real-time. In this way, whenever the user of the host mobile communication terminal 100 draws an image with the stylus pen as illustrated in FIG. 7A, the drawing process of the image is transmitted to the client mobile communication terminals 200 and 201 in real-time. Accordingly, the input unit of the direct board included in the client mobile communication terminal 200 displays the drawing process as illustrated in FIG. 7C, as the user of the host mobile communication terminal 100 directly draws the image.

Further, when the host mobile communication terminal 100 transmits horizontal and vertical coordinates (i.e. Xₙ and Yₙ) scanned at the point in time at which the stylus pen separates from the touch pad to the client mobile communication terminals 200 and 201 in real-time, the host mobile communication terminal 100 transmits color and thickness information, and information reporting the ending of one image line. Accordingly, each of the client mobile communication terminals 200 and 201 draws a line from coordinates Xₙ₋₁ and Yₙ₋₁ to the coordinates Xₙ and Yₙ on its own input unit, adjusts the color and thickness of the drawn image line according to the color and thickness information received from the host mobile communication terminal 100, and displays the image line in real-time. Further, each of the client mobile communication terminals 200 and 201 determines the image line to the coordinates Xₙ and Yₙ as one independent image according to the information reporting the ending of one image line, which has been received from the host mobile communication terminal 100. As a result, if new horizontal and vertical coordinates, and new color and thickness information are received from the host mobile communication terminal 100, each of the client mobile communication terminals 200 and 201 displays a beginning point for drawing a new image without drawing a line between the new horizontal and vertical coordinates and the coordinates Xₙ and Yₙ.

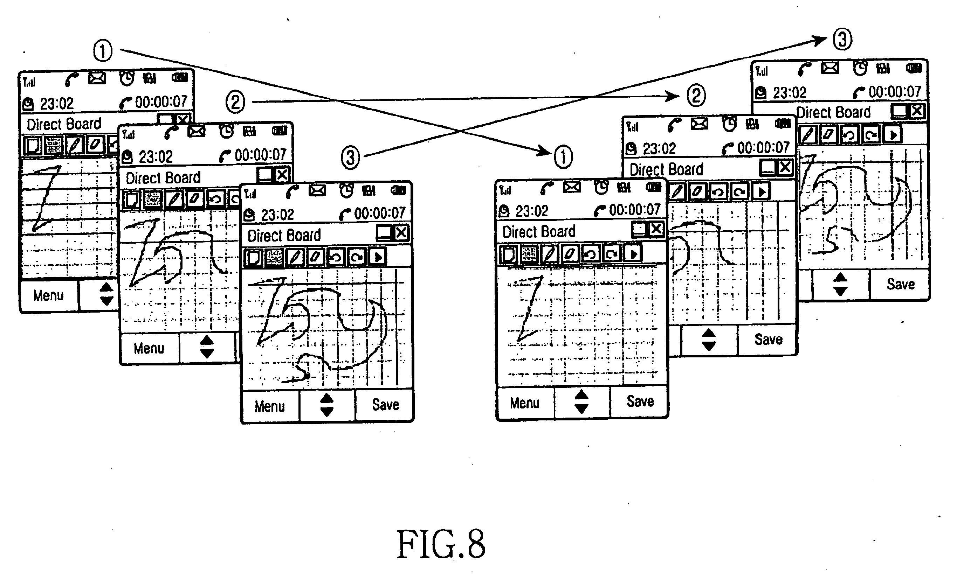

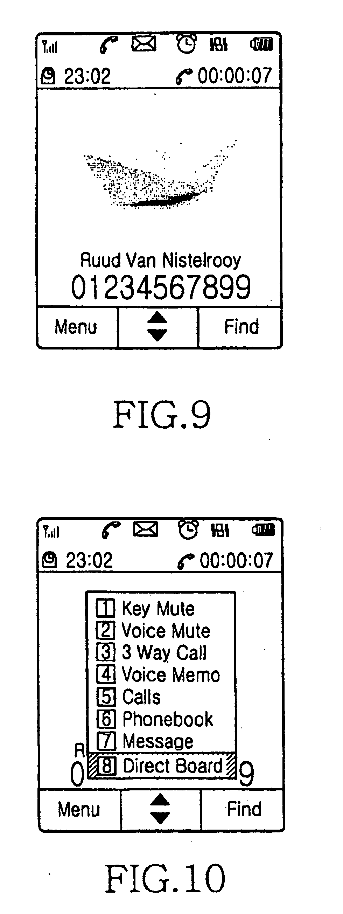

Whenever the user of the host mobile communication terminal 100 draws the image with the stylus pen, the drawing process of the image is transmitted to the client mobile communication terminals 200 and 201 in real-time, so that the image is displayed on the input unit 1000 of the direct board included in each of the client mobile communication terminals 200 and 201. This process is as illustrated in FIG. 8. In the present invention, when a mobile communication network simultaneously uses a voice communication network and a data communication network, a user may use the direct board together with voice communication. If the mobile communication network does not simultaneously use the voice communication network and the data communication network, a user may use the direct board together with a messenger, or may use only the direct board. A case of using the direct board together with voice communication will be described with reference to FIGs. 9 to 12.

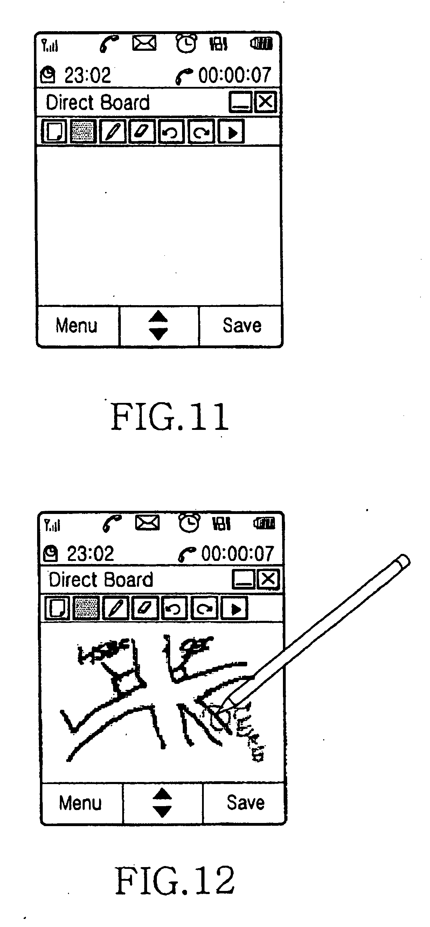

If the user of the host mobile communication terminal 100 makes a request for entering a menu including the direct board, the host mobile communication terminal 100 displays the menu including the direct board as illustrated in FIG. 10 in a state of displaying a screen for the voice communication as illustrated in FIG. 9. The user having checked the menu of FIG. 10 may select the direct board by pressing a number key 8 or by moving a cursor by means of a direction key in order to use the direct board. If the user selects the direct board in a state in which the menu of FIG. 10 is displayed, the host mobile communication terminal 100 executes the direct board. The initial screen of the executed direct board is as illustrated in FIG. 11, and the user continuously draws an image with the stylus pen as illustrated in FIG. 12 during voice communication.

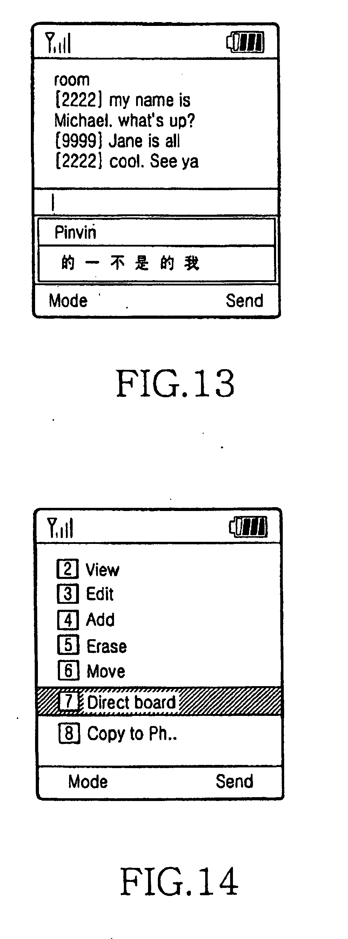

Hereinafter, the process in which a user simultaneously uses the messenger and the direct board will be described with reference to the diagrams of FIGs. 13 to 15.

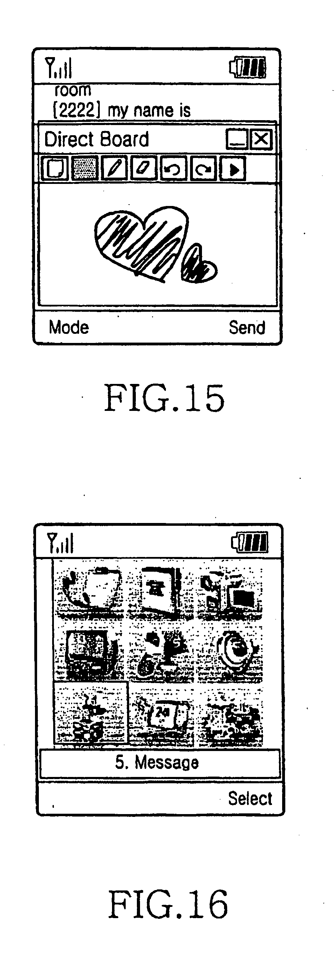

If the user of the host mobile communication terminal 100 makes a request for entering a menu including the direct board while using the messenger, the host mobile communication terminal 100 displays the menu including the direct board as illustrated in FIG. 14 in a state of displaying a screen for the messenger as illustrated in FIG. 13. The user having checked the menu of FIG. 14 may select the direct board by pressing a number key 7 or by moving a cursor by means of a direction key in order to use the direct board. If the user selects the direct board in a state in which the menu of FIG. 14 is displayed, the host mobile communication terminal 100 executes the direct board. FIG. 15 illustrates a screen including an image drawn by the user in a state in which the direct board has been executed.

Hereinafter, a case in which a user uses only the direct board will be described with reference to the diagrams of FIGs. 16 to 18.

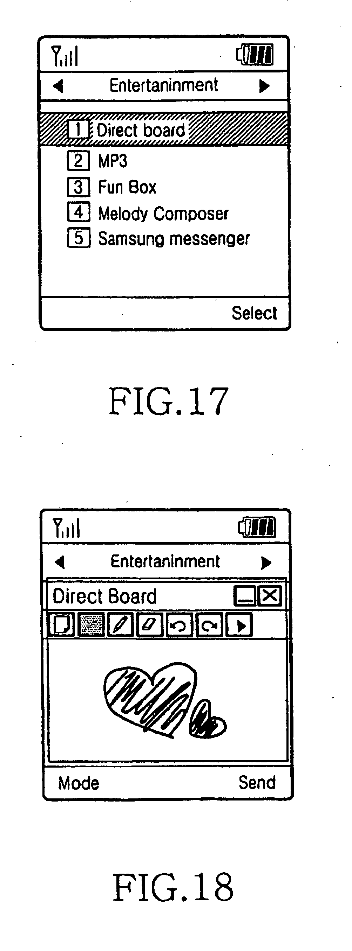

If the user of the host mobile communication terminal 100 makes a request for entering a menu including the direct board in an initial menu screen of the host mobile communication terminal 100 as illustrated in FIG. 16 in order to use the direct board, the host mobile communication terminal 100 displays the menu including the direct board as illustrated in FIG. 17. The user having checked the menu of FIG. 17 may select the direct board by pressing a number key 1 or by moving a cursor by means of a direction key in order to use the direct board. If the user selects the direct board in a state in which the menu of FIG. 17 is displayed, the host mobile communication terminal 100 executes the direct board. FIG. 18 illustrates a screen including an image drawn by the user in a state in which the direct board has been executed.

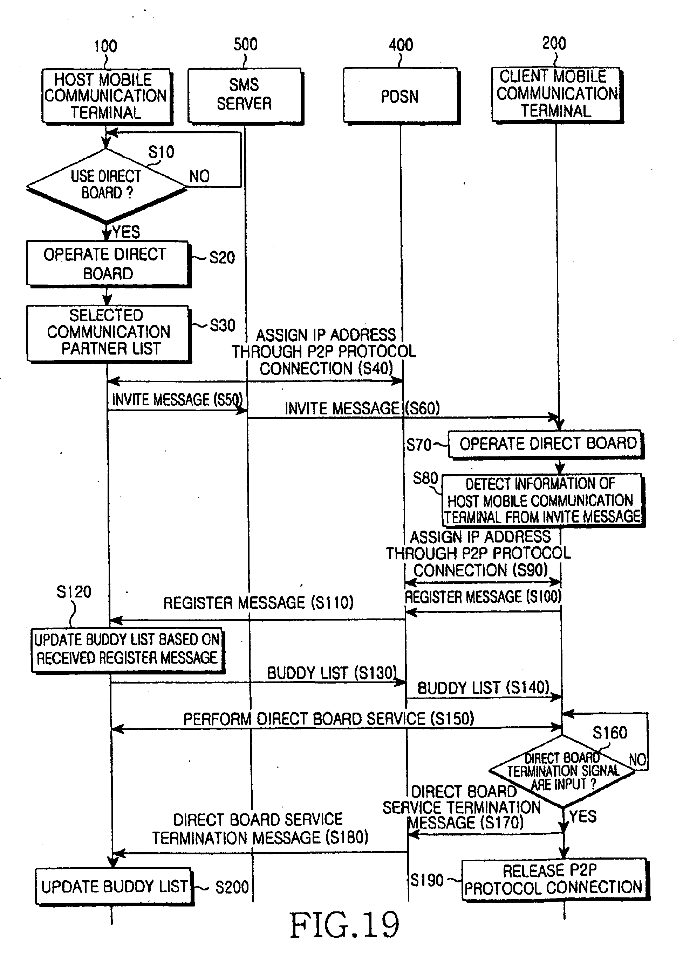

FIG. 19 is a flow diagram illustrating a process of transmitting in real-time images drawn on the direct boards of the host mobile communication terminal and the client mobile communication terminal according to the present invention.

The host mobile communication terminal 100 is in a voice communication state, providing a messenger service, or is in a waiting state. In this state, the host mobile communication terminal 100 determines if a command for using the direct board is input (S10). If the command for using the direct board is input, the host mobile communication terminal 100 executes the direct board (S20). If signals selected by a user are input for the direct board, who belongs to users corresponding to client mobile communication terminals, the host mobile communication terminal 100 generates a buddy list corresponding to a selected communication partner list (S30).

After generating the buddy list, the host mobile communication terminal 100 performs a P2P protocol connection with the PDSN 400, and receives an IP address from the PDSN 400 (S40). Then, the host mobile communication terminal 100 transmits an invite message to the SMS server 500 in the form of an SMS message, which includes information for the received IP address, ID information of the host mobile communication terminal 100, and port number information (S50). The SMS server 500 transmits the received invite message to the client mobile communication terminal 200 (S60).

If the invite message is received, the client mobile communication terminal 200 determines that the received message corresponds to a message for the direct board, and executes the direct board (S70). The client mobile communication terminal 200 detects the information of the host mobile communication terminal 100 from the invite message (S80). Herein, the information of the host mobile communication terminal 100 includes the information for the IP address of the host mobile communication terminal 100, the ID information of the host mobile communication terminal 100, the port number information, etc.

The client mobile communication terminal 200 receives an IP address through a P2P protocol connection with the PDSN 400 (S90). Then, the client mobile communication terminal 200 transmits a register message including the received IP address to the PDSN 400 (S100). The register message includes UDP information, port number information, and authentication information in addition to the information for the IP address. The PDSN 400 transmits the received register message to the host mobile communication terminal 100 (S110).

The host mobile communication terminal 100 updates the buddy list selected for communication based on the received register message (S120). Then, the host mobile communication terminal 100 transmits the updated the buddy list to the PDSN 400 (S130). The PDSN 400 transmits the received buddy list to the client mobile communication terminal 200 (S140). If the host mobile communication terminal 100 shares the buddy list, which includes information for the same communication partners, with the client mobile communication terminal 200, the host mobile communication terminal 100 and the client mobile communication terminal 200 perform the direct board service therebetween (S 150).

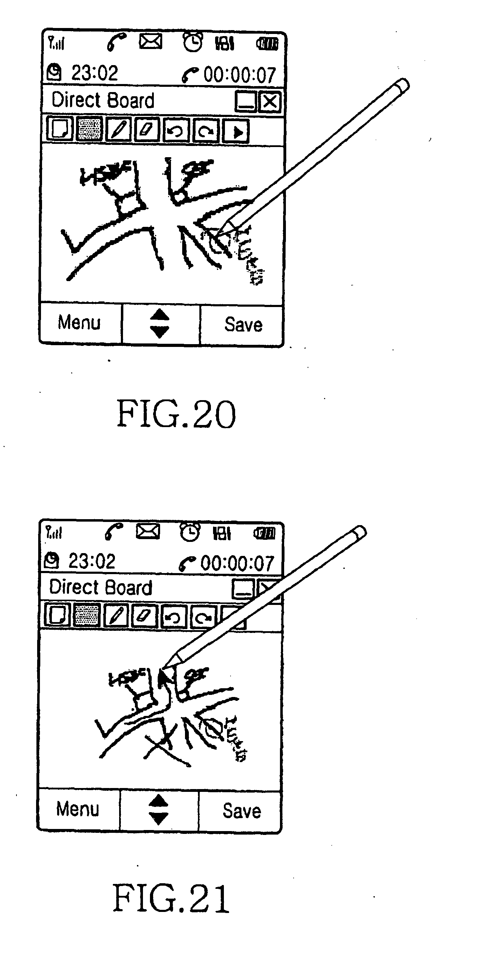

For example, in step 150, the user of the host mobile communication terminal 100 makes a sketch map showing the way to the location of an appointment with the stylus pen as illustrated in FIG. 20. The host mobile communication terminal 100 transmits data constituting the drawn image to the client mobile communication terminal 200, which includes the direction information of the image line, the color information, the thickness information and the information reporting the beginning or ending of one image line. Accordingly, the client mobile communication terminal 200 displays the image on the input unit 1000 of its own direct board based on the data transmitted from the host mobile communication terminal 100, as the user of the host mobile communication terminal 100 directly makes the sketch map.

While the image is transmitted and displayed in real-time between the host mobile communication terminal 100 and the client mobile communication terminal 200, each user can continuously communicate with each other. Accordingly, the user of the client mobile communication terminal 200 can transfer additional questions to the host mobile communication terminal 100 through voice communication while watching the sketch map drawn on the direct board in real-time. The user of the host mobile communication terminal 100 having received the question can modify the sketch map as illustrated in FIG. 21 in order to provide an additional description. The host mobile communication terminal 100 continuously transmits the image of the modified sketch map in real-time, and the client mobile communication terminal 200 displays the modified sketch map on the direct board in real-time.

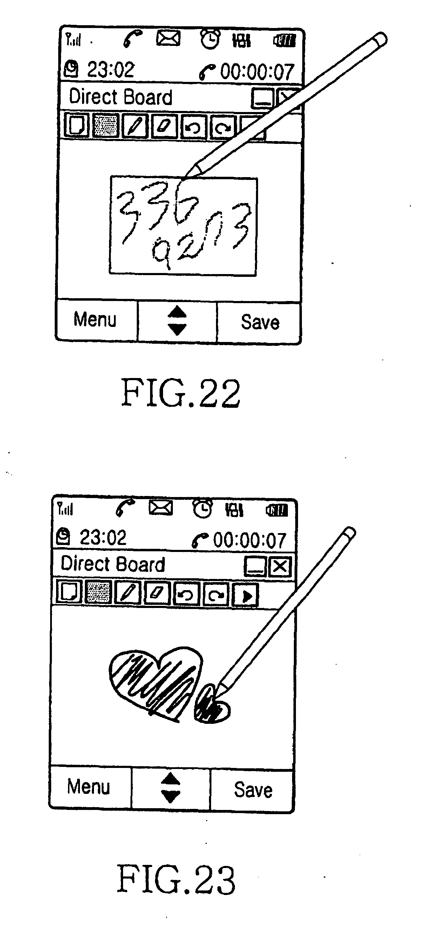

After having determined that the user of the client mobile communication terminal 200 has become aware of the location of the appointment through the voice communication, the user of the host mobile communication terminal 100 can also provide additional information, such as by drawing the phone number of the location of the appointment with the stylus pen as illustrated in FIG. 22. The client mobile communication terminal 200 also receives the image of the phone number in real-time and displays the received image on the direct board.

Further, the user of the client mobile communication terminal 200 can store the images drawn on the direct board in real-time. In addition, the user of the client mobile communication terminal 200 can draw images on the direct board and transmit the images to the host mobile communication terminal 100. FIG. 23 is a diagram illustrating a heart-shaped image drawn by the user of the client mobile communication terminal 200. The client mobile communication terminal 200 transmits the heart-shaped image to the host mobile communication terminal 100 in real-time. Accordingly, the host mobile communication terminal 100 displays the heart-shaped image on the direct board in real-time.

While the direct board service is performed is step 150, the client mobile communication terminal 200 determines if direct board termination signals are input (S 160). If the direct board termination signals are not input, the client mobile communication terminal 200 continues to perform the direct board service with the host mobile communication terminal 100.

However, if the direct board termination signals are input, the client mobile communication terminal 200 transmits a direct board service termination message to the PDSN 400 (S170). If the direct board service termination message is received from the client mobile communication terminal 200, the PDSN 400 transmits the received direct board service termination message to the host mobile communication terminal 100 (S180). After transmitting the direct board service termination message, the client mobile communication terminal 200 releases the P2P protocol connection with the PDSN 400 (S190). Further, if the direct board service termination message is received from the PDSN 400, the host mobile communication terminal 100 updates the buddy list (S200).

According to the present invention as described above, image data are transmitted in real-time, so that a user can exactly transfer information which may be inexactly transferred through voice communication.

Although a preferred embodiment of the present invention has been described for illustrative purposes, those skilled in the art will appreciate that various modifications, additions and substitutions are possible, without departing from the scope of the invention as disclosed in the accompanying claims, including the full scope of equivalents thereof.

## Claims

1. A method for displaying image data from a host mobile communication terminal on a client mobile communication terminal in real time, each of the client and host mobile communication terminals having an application for generating and displaying image data, the method comprising the steps of:
displaying, by the host mobile communication terminal, a first image drawn by a user;
scanning, by the host mobile communication terminal, the first image, obtaining coordinates of the first image and transmitting image data comprising the coordinates of the first image to the client mobile communication terminal in real time for enabling the client mobile communication terminal to receive the image data and display a second image based on the coordinates of the first image by drawing lines from coordinate to coordinate in real time.

2. The method as claimed in claim 1, wherein the image data further comprises direction information of an image line, color information and thickness information.

3. The method as claimed in claim 2, wherein the direction information of the image line includes horizontal and vertical coordinates detected by scanning the first image drawn by the user in real time.

4. The method as claimed in claim 3, wherein the client mobile communication terminal having received the horizontal and vertical coordinates interconnects the coordinates, and draws and displays the image line.

5. The method as claimed in claim 4, wherein the drawn image line is displayed after a color and a thickness of the image line is adjusted according to the received color and thickness information.

6. The method as claimed in claim 3, wherein the application corresponds to an application for generating the image data of the first image through a stylus pen or a touch screen.

7. The method as claimed in claim 6, wherein all horizontal and vertical coordinates, which are scanned between horizontal and vertical coordinates scanned when the stylus pen contacts the touch pad for the first time and horizontal and vertical coordinates scanned when the stylus pen separates from the touch pad, correspond to information for forming one image line.

8. The method as claimed in claim 6, wherein the application includes an input unit for drawing images, a new sentence menu for initializing the input unit in order to draw new images, a color menu for selecting a color of an input image line, a thickness adjustment menu for adjusting thickness of the input image line, an entire deletion menu for deleting all drawn images, an execution cancellation menu for canceling drawn images, a re-execution menu for restoring the image cancelled by the execution cancellation menu, and a display menu for reproducing an image drawing process.

9. The method as claimed in claim 8, wherein the color information includes combinations of RGB values.

10. The method as claimed in claim 8, wherein the thickness information includes values set through the thickness adjustment menu.

11. The method as claimed in claim 8, wherein the thickness information corresponds to thickness values of the image line drawn on the input unit in proportion to a force with which a user presses against a touch pad with the stylus pen.

12. The method as claimed in claim 1, wherein the application is executed while the host mobile communication terminal performs voice communication with the client mobile communication terminal.

13. The method as claimed in claim 1, wherein the application is executed while the host mobile communication terminal performs a messenger service with the client mobile communication terminal.

## Patentansprüche

1. Verfahren zum Anzeigen von Bilddaten von einem Host-Mobilkommunikations-Endgerät an einem Client-Mobilkommunikations-Endgerät in Echtzeit, wobei das Client- und das Host-Mobilkommunikations-Endgerät jeweils über eine Anwendung zum Erzeugen und Anzeigen von Bilddaten verfügen und das Verfahren die folgenden Schritte umfasst:
Anzeigen eines ersten von einem Benutzer gezeichneten Bildes durch das Host-Mobilkommunikations-Endgerät;
Abtasten des ersten Bildes durch das Host-Mobilkommunikations-Endgerät, womit Koordinaten des ersten Bildes gewonnen werden, und Übertragen von Bilddaten, die die Koordinaten des ersten Bildes umfassen, zu dem Client-Mobilkommunikations-Endgerät in Echtzeit, um das Client-Mobilkommunikations-Endgerät zu befähigen, die Bilddaten zu empfangen und ein zweites Bild auf Basis der Koordinaten des ersten Bildes durch Ziehen von Linien von Koordinate zu Koordinate in Echtzeit anzuzeigen.

2. Verfahren nach Anspruch 1, wobei die Bilddaten des Weiteren Richtungs-Informationen einer Bildlinie, Farb-Informationen und Dicken-Informationen umfassen.

3. Verfahren nach Anspruch 2, wobei die Richtungs-Informationen der Bildlinie horizontale und vertikale Koordinaten enthalten, die durch Abtasten des ersten von dem Benutzer gezeichneten Bildes in Echtzeit erfasst werden.

4. Verfahren nach Anspruch 3, wobei das Client-Mobilkommunikations-Endgerät, das die horizontalen und vertikalen Koordinaten empfangen hat, die Koordinaten miteinander verbindet und die Bildlinie zieht und anzeigt.

5. Verfahren nach Anspruch 4, wobei die gezogene Bildlinie angezeigt wird, nachdem eine Farbe und eine Dicke der Bildlinie entsprechend den empfangenen Farb- und Dicken-Informationen angepasst worden sind.

6. Verfahren nach Anspruch 3, wobei die Anwendung einer Anwendung zum Generieren der Bilddaten des ersten Bildes über einen Stylus-Stift oder einen berührungsempfindlichen Bildschirm entspricht.

7. Verfahren nach Anspruch 6, wobei alle horizontalen und vertikalen Koordinaten, die zwischen horizontalen und vertikalen Koordinaten abgetastet werden, die abgetastet werden, wenn der Stylus-Stift die berührungsempfindliche Fläche zum ersten Mal berührt, und horizontalen und vertikalen Koordinaten, die abgetastet werden, wenn sich der Stylus-Stift von der berührungsempfindlichen Fläche trennt, Informationen zum Ausbilden einer Bildlinie entsprechen.

8. Verfahren nach Anspruch 6, wobei die Anwendung eine Eingabeeinheit zum Zeichnen von Bildern, ein Neuer-Satz-Menü zum Initialisieren der Eingabeeinheit zum Zeichnen neuer Bilder, ein Farb-Menü zum Auswählen einer Farbe einer eingegebenen Bildlinie, ein Dicken-Anpassungs-Menü zum Anpassen von Dicke der eingegebenen Bildlinie, ein Alles-Löschen-Menü zum Löschen aller gezeichneten Bilder, ein Ausführungs-Aufhebungs-Menü zum Aufheben gezeichneter Bilder, ein Wiederausführungs-Menü zum Wiederherstellen der durch das Ausführungs-Aufhebungs-Menü aufgehobenen Bilder sowie ein Anzeige-Menü zum Wiedergeben eines Prozesses zum Zeichnen eines Bildes enthält.

9. Verfahren nach Anspruch 8, wobei die Farb-Informationen Kombinationen von RGB-Werten enthalten.

10. Verfahren nach Anspruch 8, wobei die Dicken-Informationen Werte enthalten, die über das Dicken-Anpassungs-Menü eingestellt werden.

11. Verfahren nach Anspruch 8, wobei die Dicken-Informationen Dicken-Werten der an der Eingabeeinheit gezogenen Bildlinie entsprechen, die proportional zu einer Kraft sind, mit der ein Benutzer mit dem Stylus-Stift auf eine berührungsempfindliche Fläche drückt.

12. Verfahren nach Anspruch 1, wobei die Anwendung ausgeführt wird, während das Host-Mobilkommunikations-Endgerät Sprachkommunikation mit dem Client-Mobilkommunikations-Endgerät durchführt.

13. Verfahren nach Anspruch 1, wobei die Anwendung ausgeführt wird, während das Host-Mobilkommunikations-Endgerät einen Benachrichtigungsdienst mit dem Client-Mobilkommunikations-Endgerät durchführt.

## Revendications

1. Procédé pour afficher des données d'image provenant d'un terminal de communication mobile hôte sur un terminal de communication mobile client en temps réel, chacun des terminaux de communication mobile client et hôte disposant d'une application pour générer et afficher des données d'image, le procédé comprenant les étapes consistant à :
- afficher, par le terminal de communication mobile hôte, une première image tracée par un utilisateur ;
- scanner, par le terminal de communication mobile hôte, la première image en obtenant des coordonnées de la première image et transmettre des données d'image comprenant les coordonnées de la première image au terminal de communication mobile client en temps réel pour permettre au terminal de communication mobile client de recevoir des données d'image et d'afficher une seconde image fondée sur les coordonnées de la première image en traçant des lignes d'une coordonnée à une coordonnée en temps réel.

2. Procédé selon la revendication 1, pour lequel les données d'image comprennent en outre des informations de direction d'une ligne d'image, des informations de couleur et des informations d'épaisseur.

3. Procédé selon la revendication 2, pour lequel les informations de direction de la ligne d'image incluent des coordonnées horizontales et verticales détecté en scannant la première image tracée par l'utilisateur en temps réel.

4. Procédé selon la revendication 3, pour lequel le terminal de communication mobile client, ayant reçu les coordonnées horizontales et verticales, interconnecte, trace et affiche les lignes d'image.

5. Procédé selon la revendication 4, pour lequel la ligne d'image tracée est affichée après qu'une couleur et une épaisseur de la ligne d'image aient été ajustées selon les informations de couleur et d'épaisseur reçues.

6. Procédé selon la revendication 3, pour lequel l'application correspond à une application de génération des données d'image de la première image par un stylet ou un écran tactile.

7. Procédé selon la revendication 6, pour lequel toutes les coordonnées horizontales et verticales, qui sont scannées entre les lignes horizontales et verticales scannées lorsque le stylet vient au contact du pavé tactile pour la première fois et les coordonnées horizontales et verticales scannées lorsque le stylet quitte le pavé tactile, correspondent à des informations pour former une ligne d'image.

8. Procédé selon la revendication 6, pour lequel l'application comprend une unité d'entrée pour tracer des images, un menu de phrase nouvelle pour d'initialiser l'unité d'entrée afin de tracer de nouvelles images, un menu de couleur pour sélectionner une couleur d'une ligne d'image d'entrée, un menu d'ajustement d'épaisseur pour ajuster l'épaisseur de la ligne d'image d'entrée, un menu d'effacement total pour effacer toutes les images tracées, un menu d'annulation d'exécution pour annuler des images tracées, un menu de réexécution pour restaurer les images annulées par le menu d'annulation d'exécution et un menu d'affichage pour reproduire un processus de traçage d'image.

9. Procédé selon la revendication 8, pour lequel les informations de couleur incluent des combinaisons de valeurs RGB.

10. Procédé selon la revendication 8, pour lequel les informations d'épaisseur incluent des valeurs établies par le menu d'ajustement d'épaisseur.

11. Procédé selon la revendication 8, pour lequel les informations d'épaisseur correspondent à des valeurs d'épaisseur de la ligne d'image tracée par l'unité d'entrée en proportion d'une force avec laquelle un utilisateur appuie contre un pavé tactile avec le stylet.

12. Procédé selon la revendication 1, pour lequel l'application est exécutée tandis que le terminal de communication mobile hôte effectue une communication vocale avec le terminal de communication mobile client.

13. Procédé selon la revendication 1, pour lequel l'application est exécutée tandis que le terminal de communication mobile hôte assure un service de messagerie avec le terminal de communication mobile client.
